# EUROPEAN PATENT SPECIFICATION

(11) **EP 1 970 874 B1**
(45) Date of publication and mention of the grant of the patent: **20.06.2012**
(21) Application number: 08004491.0
(22) Date of filing: 11.03.2008
(51) Int. Cl.: C08L 83/04

(54) **Hydrosilylation inhibitor, hydrosilylation catalyst composition and curable composition**
Hydrosilylierungshemmer, Hydrosilylierungskatalysator und härtbare Zusammensetzung
Inhibiteur d'hydrosilylation, composition de catalyseur d'hydrosilylation et composition durcissable

(30) Priority: 12.03.2007 JP 2007061251
(43) Date of publication of application: 17.09.2008
(73) Proprietor: Shin-Etsu Chemical Co., Ltd., Tokyo (JP)
(72) Inventor: Kimura, Shinji, Annaka-shi, Gunma-ken (JP); Hara, Hiroyasu, Annaka-shi, Gunma-ken (JP); Ikeno, Masayuki, Annaka-shi, Gunma-ken (JP)
(74) Representative: Merkle, Gebhard

(56) References cited:
- EP-A1- 0 352 493
- EP-A1- 0 651 008
- US-A1- 2003 013 802
- US-A1- 2006 089 455

## Description

### TECHNICAL FIELD

This invention relates to a hydrosilylation inhibitor which inhibits catalytic activity of the platinum-containing hydrosilylation catalyst in the absence of oxygen and/or moisture (for example, in an atmosphere of oxygen at up to 100 ppm and/or moisture at up to 100 ppm), a hydrosilylation catalyst composition containing such hydrosilylation inhibitor, and a curable composition having a long shelf life containing such hydrosilylation inhibitor and/or hydrosilylation catalyst composition. This curable composition can be cured by exposing the composition to oxygen and/or moisture.

### BACKGROUND ART

A curable composition containing an organopolysiloxane having a fatty acid unsaturated bond such as an alkenyl group becomes a gel or an elastomer after the reaction by hydrosilylation, and it is used in an extremely wide variety of applications.

This composition has an advantage that it cures at a relatively low temperature in a relatively short time since the composition cures by hydrosilylation. However, the curable composition of this type has the drawback of short shelf life. Therefore, separate preparation of a composition containing a catalyst was required and such composition had to be added afterwards.

Another known approach employed for realizing a shelf life of several days to several months depending on the temperature is preparation of a one-part curable composition which was conducted by using a known platinum inhibitor or an acetylenic compound and an amine. An alternative approach employed for reliably providing the storage stability is encapsulation of the hydrosilylation catalyst in a capsule so that the hydrosilylation catalyst is released by the dissolution or collapsing of the capsule just before the curing of the composition. Both of these approaches, however, suffered from drawbacks such as high cost, relatively high curing temperature and/or long curing time.

In order to obviate such problems, attempts have been made to inhibit the hydrosilylation catalyst in the absence of oxygen. However, complete inhibition of the catalytic activity in the absence of oxygen has been difficult.

Typical patents and patent applications of such prior art curable composition include USP 4,578,497 (Patent Document 1), USP 4,526,954 (Patent Document 2), USP 3,249,580 (Patent Document 3), USP 3,188,300 (Patent Document 4), European Patent No. 511882 (Patent Document 5), and Japanese Patent Application Kokai (Laid-Open) No. 7-166060 (Patent Document 6). Typical technical documents of such technology include Lewis, L. and Lewis, N., Chem. of Materials, Vol. 1, No. 1, pp. 106-114 (1989) (Non-patent Document 1), Lewis, L., J. Am. Chem. Soc., Vol. 112, No. 16, pp. 5998-6004 (1990) (Non-patent Document 2), Lewis, L. and Uriate, R., Organometallics, Vol. 9, pp. 621-625 (1990) (Non-patent Document 3), Harrod, J. F. and Chalk A. J., Organic Synthesis via Metal Carbonyls, Wender, I. and Piano, P. Ed., Vol. 2, pp. 672, 682-683, John Wiley & Sons, New York, New York, (1977) (Non-patent Document 4), and Dikers, H. et al., J. Chem. Soc., Vol. 2 pp. 308-313, Dalton Transactions (1980) (Non-patent Document 5).

Effects of the oxygen-free condition on the platinum-catalyzed hydrosilylation are reported in these patent and non-patent documents.

A typical curable composition in which the hydrosilylation catalyst is inhibited in the absence of oxygen by using such method is Japanese Patent Application Kokai (Laid-Open) No. 7-166060 (Patent Document 6). In such inhibition of the platinum catalyst, strict control of the oxygen concentration was required, and therefore, simultaneous incorporation of an acetylenic compound or an amine which has inhibitory action in the presence of oxygen was required for realizing the long shell life. As a consequence, curability in the presence of oxygen was reduced.

### DISCLOSURE OF THE INVENTION

An object of the present invention is to provide a hydrosilylation inhibitor which exerts its inhibitory action for the hydrosilylation catalyst in the substantial absence of oxygen and moisture at an oxygen and moisture concentration of about up to 100 ppm, and a hydrosilylation catalyst composition containing such hydrosilylation inhibitor. Another object of the present invention is to provide a curable composition which does not cure in the absence of oxygen and moisture, but which cures in the presence of oxygen and moisture to produce a cured product in the form of a gel, elastomer, or the like.

In view of the situation as described above, the inventors of the present invention made an intensive study and found that a hydrosilylation inhibitor comprising a reaction product of a titanium compound having an alkoxy group in its ligand and an organosilicon compound having at least one hydrogen atom bonded to silicon atom (namely, SiH group) per molecule is capable of effectively inhibiting the catalytic activity of the hydrosilylation catalyst in the absence of oxygen and moisture.

Accordingly, the present invention provides the following hydrosilylation inhibitor, hydrosilylation catalyst composition, and curable composition.
[1] A hydrosilylation inhibitor comprising a reaction product of (1) a titanium compound having an alkoxy group in its ligand, and (2) an organosilicon compound having at least one hydrogen atom bonded to silicon atom per molecule.
[2] The hydrosilylation inhibitor according to [1] wherein the titanium compound (1) having an alkoxy group in its ligand is a tetraalkoxy titanium represented by the formula Ti(OR³)₄ wherein R³ is independently an alkyl group, or an alkyl orthotitanate.
[3] The hydrosilylation inhibitor according to [2] wherein the titanium compound (1) having an alkoxy group in its ligand is at least one selected from the group consisting of tetraethyl orthotitanate, tetra-n-propyl orthotitanate, tetraisopropyl orthotitanate, tetrabutyl orthotitanate and tetra-2-ethylhexyl orthotitanate.
[4] The hydrosilylation inhibitor according to any one of [1] to [3] wherein the organosilicon compound (2) having at least one hydrogen atom bonded to silicon atom per molecule is selected from an organohydrogensilane represented by the following formula (i):

   R¹_{b}(OR²)_{4-a-b}SiHₐ (i),

   and an organohydrogen(poly)siloxane having at least one unit represented by the following formula (ii):

   H_{c}R¹_{d}(OR²)ₑSiO_{(4-c-d-e)/2} (ii)

   wherein R¹ is independently a monovalent hydrocarbon group; R² is independently an alkyl group; a is 1, 2, or 3; b is 0, 1, 2, or 3; a+b = 1, 2, 3, or 4; c is 1, 2, or 3; d and e are independently 0, 1, or 2; and c+d+e is 1, 2, or 3.
[5] The hydrosilylation inhibitor according to [4] wherein the organosilicon compound (2) having at least one hydrogen atom bonded to silicon atom per molecule is an organohydrogenpolysiloxane having
   M^{H} unit (diorganohydrogensiloxane unit),
   D^{H} unit (organohydrogensiloxane unit) or
   T" unit (hydrogensilsesquioxane unit).
[6] The hydrosilylation inhibitor according to [4] wherein the organosilicon compound (2) having at least one hydrogen atom bonded to silicon atom per molecule is at least one selected from the group consisting of trimethoxysilane, triethoxysilane, 1,1,1,3,5,5,5-heptamethyltrisiloxane, 1,1,1,3,5,7,7,7-octamethyltetrasiloxane, and 1,3,5,7-tetramethylcyclotetrasiloxane.
[7] A hydrosilylation catalyst composition produced by contacting and mixing a PGE (platinum group element)-bearing hydrosilylation catalyst and the hydrosilylation inhibitor of any one of [1] to [6] in the absence of oxygen and moisture.
[8] A curable composition containing
   a compound containing at least two ethylenically unsaturated double bonds or acetylenically unsaturated group per molecule,
   an organohydrogenpolysiloxane crosslinking agent,
   a PGE-bearing hydrosilylation catalyst, and
   the hydrosilylation inhibitor of any one of [1] to [6].
[9] A curable composition containing
   a compound containing at least two ethylenically unsaturated double bonds or acetylenically unsaturated group,
   an organohydrogenpolysiloxane crosslinking agent, and
   the hydrosilylation catalyst composition of [7].
[10] The curable composition according to [9] further comprising the hydrosilylation inhibitor of any one of [1] to [6].
[11] The curable composition according to [8] wherein the organosilicon compound (2) having at least one hydrogen atom bonded to silicon atom per molecule of the hydrosilylation inhibitor serves as the organohydrogenpolysiloxane crosslinking agent.
[12] The curable composition according to [11] wherein the hydrosilylation inhibitor of any one of [1] to [6] is contained in an amount of 1 to 1000 times molar excess of the PGE-bearing hydrosilylation catalyst.
[13] The curable composition according to any one of [8] to [10] wherein the hydrosilylation inhibitor of any one of [1] to [6] is contained in an amount of 0.0001 to 5% by weight in the composition.
[14] The curable composition according to any one of [8] to [13] further comprising a dehydrating agent.
[15] The curable composition according to any one of [8] to [14] wherein the compound containing at least 2 ethylenically unsaturated double bonds or acetylenically unsaturated group is an organopolysiloxane containing alkenyl groups.
[16] The curable composition according to any one of [8] to [15] which is to be cured in the presence of oxygen and/or moisture.

### EFFECTS OF THE INVENTION

The hydrosilylation inhibitor of the present invention can reliably inhibit the catalytic function of the hydrosilylation catalyst in the absence of oxygen and moisture. The hydrosilylation-curable composition using such hydrosilylation inhibitor is easily cured even at room temperature in the presence of oxygen and/or moisture.

### DESCRIPTION OF THE PREFERRED EMBODIMENTS

In the present invention, the PGE (platinum group element)-bearing hydrosilylation catalyst is inactivated in the absence of oxygen and moisture by using a hydrosilylation inhibitor comprising a reaction product of a titanium compound having an alkoxy group in its ligand and an organosilicon compound having hydrogen atom bonded to silicon atom (SiH group). This inhibitor is used in preparing a one-part or multi-part storage-stable curable composition containing (A) a compound having at least two an ethylenically or an acetylenically unsaturated double bond such as alkenyl group per molecule, and (B) an organohydrogenpolysiloxane crosslinking agent containing, on average, at least two hydrogen atoms bonded to silicon per molecule. Curing of the composition containing such inhibitor is suppressed until the composition is exposed to oxygen or moisture.

The hydrosilylation inhibitor of the present invention which inhibits hydrosilylation catalyst in the absence of the oxygen and moisture is a reaction product of (1) a titanium compound having an alkoxy group in its ligand, and (2) an organosilicon compound having at least one hydrogen atom bonded to silicon atom per molecule. This hydrosilylation inhibitor is the reaction product generated by dehydrogenation between the alkoxy group in the component (1) and the hydrosilyl group (SiH group) in the component (2), and generation of the reaction product by the dehydrogenation can be readily confirmed by the change in color of the mixture of the component (1) and the component (2).

Preferably, the titanium compound having an alkoxy group in its ligand which inhibits active catalyst in the absence of oxygen and moisture is a tetraalkoxy titanium represented by the formula: Ti(OR³)₄ or an alkyl orthotitanate. In the above formula, R³ independently represents an alkyl group preferably having 1 to 12 carbon atoms, and most preferably having 2 to 8 carbon atoms.

Examples of the preferable alkyl orthotitanates include tetraethyl orthotitanate, tetra-n-propyl orthotitanate, tetraisopropyl orthotitanate, tetrabutyl orthotitanate, and tetra-2-ethylhexyl orthotitanate.

On the other hand, examples of the organosilicon compound of component (2) include an organosilane, a polysilane, and an organopolysiloxane each having 1 to 3 or more hydrogen atoms bonded to the silicon per molecule. Examples of the substituent other than the hydrogen atom bonded to silicon atom in the organosilicon compound include a monovalent hydrocarbon group, an organosilyl alkyl group (-R*Si≡) (wherein R* represents an alkylene group), an organosiloxy group (-OSi≡), or an alkoxy group.

The preferable organosilicon compounds include an organohydrogensilane and an organohydrogen(poly)siloxane, especially an organohydrogensilane represented by the following formula (i) and an organohydrogen(poly)siloxane having at least one unit represented by formula (ii) per molecule.

R¹_{b}(OR²)_{4-a-b}SiHₐ (i)

H_{c}R¹_{d}(OR²)ₑSiO_{(4-c-d-e)/2} (ii)

In the formula, R¹ is a monovalent hydrocarbon group, and preferably a monovalent hydrocarbon group having 1 to 10, especially 1 to 8 carbon atoms; R² is an alkyl group, and preferably an alkyl group having 1 to 4, especially 1 to 2 carbon atoms; a is 1, 2, or 3 and b is 0, 1, 2, or 3, and a+b = 1, 2, 3, or 4; c is 1, 2, or 3, and d and e are independently 0, 1, or 2, and c+d+e is 1, 2, or 3; and when a plurarity of R¹ or R² are present, they may be the same or different.

Examples of the monovalent hydrocarbon group of R¹ include alkyl groups such as methyl group, ethyl group, propyl group, isopropyl group, butyl group, hexyl group, octyl group, and dodecyl group; cycloalkyl groups such as cyclopentyl group, cyclohexyl group, and cycloheptyl group; aryl groups such as phenyl group, tolyl group, xylyl group, and naphthyl group; aralkyl groups such as benzyl group, phenylethyl group, and phenylpropyl group; groups wherein at least one hydrogen atom of the hydrocarbon group is substituted with fluorine atom, chlorine atom, or nitrile group, such as trifluoropropyl group, chloromethyl group, or cyanoethyl group.

When the organosilicon compound is an organohydrogen(poly)siloxane, the siloxane unit containing the hydrogen atom bonded to silicon may be bonded to 1, 2, or 3 siloxane units. The organohydrogen(poly)siloxane includes the organohydrogendisiloxane represented by the following formula (iii):

(SiR¹₂H)₂O (iii).

The organosilicon compound of component (2) is preferably an alkoxysilane such as methyldimethoxysilane, trimethoxysilane and triethoxysilane or an organohydrogenpolysiloxane having
M^{H} unit (diorganohydrogensiloxane unit),
D^{H} unit (organohydrogensiloxane unit), or
T^{H} unit (hydrogensilsesquioxane unit).
Specifically, trimethoxysilane, triethoxysilane, 1,1,1,3,5,5,5-heptamethyltrisiloxane, 1,1,1,3,5,7,7,7-octamethyltetrasiloxane and 1,3,5,7-tetramethylcyclotetrasiloxane are exemplified.

The titanium compound having an alkoxy group in its ligand reacts with the organosilicon compound having at least one hydrogen atom bonded to the silicon atom per molecule in the absence of oxygen and moisture. While the reaction product has the action of inhibiting the hydrosilylation catalyst, this inhibitory action is lost when it decomposes in the presence of oxygen and moisture.

Typically, the alkoxy titanium compound is added to the organosilicon compound in the absence of oxygen and moisture. Molar ratio of the organosilicon compound to the alkoxy titanium compound is typically such that the molar ratio of the titanium in the alkoxy titanium compound to the SiH group in the organosilicon compound is greater than 1, and preferably at least 2, and more preferably at least 4. Although there is no particular upper limit for the ratio, the upper limit is typically up to 100, preferably up to 30, and most preferably up to 10.

The reaction may be conducted in the absence of oxygen and moisture (preferably, at each of the oxygen concentration and the moisture concentration of up to 100 ppm, and most preferably, up to 10 ppm) at a temperature of 0 to 60°C, and in particular, at 0 to 30°C typically for a reaction time of at least 10 minutes, and preferably, for at least 30 minutes. Although there is no particular upper limit for the reaction time, the reaction is typically conducted for a reaction time within 24 hours, and in particular, within 12 hours in view of the convenience of the productivity of the process. The resulting inhibitor is isolated, and stored in the absence of the oxygen and the moisture.

The solvent may be conducted in a solution by optionally adding an appropriate solvent, and in such a case, any solvent can be used as long as it can dissolve the alkoxy titanium and the SiH group containing organosilicon compound. Exemplary preferable solvents include organic solvents such as an aliphatic hydrocarbon and an aromatic hydrocarbon, silicone solvents such as dimethylsilicone oil and methylphenylsilicone oil, and halogenated hydrocarbon solvents. The reaction is preferably conducted by using a solution at a high concentration such that the total concentration of the alkoxy titanium and the SiH group-containing organosilicon compound is at least 50% by weight.

The hydrosilylation inhibitor as described above inhibits the catalytic activity of the hydrosilylation catalyst. In other words, the important feature of the present invention is that the hydrosilylation inhibitor realizes the storage stability of the composition which cures by hydrosilylation (addition reaction) in the absence of oxygen and moisture, and this feature is realized by the inhibition of the hydrosilylation catalyst which contains an element of platinum group in the periodic table or its compound and which is active in the absence of the oxygen.

In the present invention, the catalyst which is active in the absence of oxygen may be any of the platinum group elements and compounds of such metal elements that have been reported to be capable of catalyzing the hydrosilylation between the an alkenyl group or an alkynyl group and hydrogen atom bonded to the silicon.

Exemplary useful catalysts which are active in the absence of the oxygen include platinum black, chloroplatinic acid, alcohol-modified chloroplatinic acid, a complex of chloroplatinic acid and olefin, aldehyde, vinyl siloxane, acetylene alcohol, or the like, and rhodium.

Among these, the particularly preferred are reaction products between a halogen-containing platinum compounds such as chloroplatinate (II) or chloroplatinic acid and a terminally unsaturated hydrocarbon or an alkenyl group-containing silane or a sym-tetraalkyl divinyl disiloxane. The complex derived from a disiloxane and chloroplatinic acid is disclosed in USP 3,419,593.

The hydrosilylation inhibitor as described above is effective when it is directly added to the hydrosilylation curable composition containing the platinum catalyst. However, the effect of suppressing the hydrosililation may be improved by preliminarily preparing a hydrosilylation catalyst composition by contacting and mixing the inhibitor and the PGE-bearing hydrosilylation catalyst at a high concentration; and adding the inhibitor in the form or such catalyst composition to the hydrosilylation curable composition.

In such a case, the catalyst composition may be prepared (namely, the inhibitor and the PGE-bearing hydrosilylation catalyst may be preliminarily mixed) by using the inhibitor and the PGE-bearing hydrosilylation catalyst at an approximate molar ratio of the platinum group element in the hydrosilylation catalyst to the titanium in the inhibitor. This ratio is typically 1 to 1000, preferably 5 to 500, and more preferably 10 to 300, and these components are contacted and mixed typically at a temperature of at 0 to 60°C, and in particular, at 0 to 30°C for typically for at least 10 minutes, and preferably at least 30 minutes in the absence of oxygen and moisture. Although there is no particular upper limit for the period of contact and mixing, they are typically contacted and mixed for a period of up to 24 hours, and in particular, up to 12 hours at the longest.

The present invention also provides
a curable composition having an excellent storage stability which inhibits curing in the absence of oxygen and moisture, and which comprises the following components:
A. a compound having at least two ethylenically unsaturated groups or acetylenically unsaturated groups in one molecule,
B. a compound (an organohydrogenpolysiloxane crosslinking agent) which has at least two hydrogen atoms bonded to the silicon atom in one molecule at an amount sufficient for curing the composition in the presence of an active hydrosilylation catalyst,
C. a PGE (platinum group element)-bearing hydrosilylation catalyst, and
D. a reaction inhibitor comprising a reaction product of a titanium compound having an alkoxy group in its ligand and a compound having hydrogen atom bonded to silicon at an amount sufficient for inactivating the platinum-containing hydrosilylation catalyst in the absence of oxygen and moisture; or
   a curable composition comprising
   the components A and B or the components A, B, and C, and
E. a hydrosilylation catalyst composition.

The compound having at least two ethylenically unsaturated double bond or acetylenically unsaturated group may be a monomer, an oligomer, or a polymer. The cured product produced by using the curable composition of the present invention may a gel, an elastomer or a resin.

The term "ethylenically unsaturated group" includes alkenyl groups such as vinyl, allyl, and 1,3-butadienyl group which may contain a hetero atom such as oxygen or nitrogen so long as curing of the curable composition is not inhibited after exposure to oxygen and/or moisture. The examples of the hetero atom-containing groups include acryloxy, -O(O)CCH=CH₂, acrylamide, and -NH(O)CCH=CH₂.

The term "acetylenically unsaturated group" includes both hydrocarbon groups such as ethynyl and -C≡C- and a substituted hydrocarbon groups such as propargyl and -O(O)CC≡CH.

The ethylenically unsaturated group or acetylenically unsaturated group present in the component A is preferably an alkenyl group having 2 to 20 carbon atoms.

The compound of component A may be liquid or solid at room temperature and includes an organopolysiloxane a monomer such as butadiene or a diacrylate derived from polyhydric alcohol, a polyolefin such as a copolymer of polyethylene, polypropylene, or styrene with an ethylenically unsaturated compound such as acrylonitrile and butadiene; ethylene - propylene - diene terpolymer; and a polymer such as acrylic resin derived from a functional organic compound including acrylate, methacrylate, or maleate.

They may be used singly or in combination of two or more.

Among them, component A is preferably an alkenyl group-containing organopolysiloxane which may be a liquid having a viscosity at 25°C as measured by a rotary viscometer of 0.1 to 1000 Pa·s or a highly consistent gum characterized by Williams plasticity values.

When the component A is an organopolysiloxane, the alkenyl group is typically vinyl, allyl, or 5-hexenyl group, preferably vinyl group.

The organic group other than the alkenyl group bonded to the silicon atom of the organopolysiloxane used for the component A, and the organic group other than the hydrogen atom bonded to the silicon atom of the organohydrogensiloxane used for the curing agent of the composition of the present invention may be a monovalent hydrocarbon group free from the ethylenic or acetylenic unsaturation. Such hydrocarbon group may be unsubstituted, or substituted with one or more halogen atoms such as chlorine, bromine or fluorine. The hydrocarbon group may also have a substituent such as epoxide group for the purpose of imparting adhesiveness and other properties with the cured product obtained from the curable composition of the present invention.

Exemplary preferable hydrocarbon groups include an alkyl group having 1 to 4 carbon atoms, a haloalkyl group having 1 to 4 carbon atoms such as chloromethyl or 3,3,3-trifluoropropyl, and an aromatic group such as phenyl or tolyl. Especially, methyl, 3,3,3-trifluoropropyl and phenyl are preferred.

The most preferable curable composition is a curable organosiloxane compound comprising an alkenyl group-containing organopolysiloxane as component A. In this case, the hydrocarbon groups of the alkenyl group-containing organopolysiloxane and the hydrocarbon groups of the organohydrogenpolysiloxane each contain at least 50 mol%, especially at least 80 mol% of methyl group. The other groups, if present, are phenyl group and/or 3,3,3-trifluoropropyl group.

The alkenyl group-containing organopolysiloxane has at least two alkenyl groups. The alkenyl group may be bonded at the terminal of the molecular chain or the side chain or both.

Typical examples of preferable alkenyl group-containing organopolysiloxane which contains the vinyl group only at its terminal include dimethylvinylsiloxy-terminated dimethylpolysiloxane, dimethylvinylsiloxy-terminated methyl-3,3,3-trifluoropropylpolysiloxane, and dimethylvinylsiloxy-terminated dimethylsiloxane - 3,3,3-trifluoropropylmethylsiloxane copolymer and methylphenylsiloxane copolymer.

Dimethylsiloxane, methylvinylsiloxane, methyl silsesquioxane, and trimethylsiloxy units are also contained as the alkenyl group-containing organopolysiloxane component.

The organopolysiloxane of component A may be used singly. Alternatively, two or more types of organopolysiloxanes may be used that are different in the molecular weight, number and types of the alkenyl groups bonded to the silicon atom, and type of other organic groups bonded to the silicon atom.

An organic compound having at least two unreacted ethylenically or acetylenically unsaturated groups per molecule is also suitable for use as the component A.

The composition containing component A is cured by the reaction with the component B, i.e., the compound having at least two hydrogen atoms bonded to silicon atom per molecule (SiH group containing compound). The SiH group containing compound may be an organic oligomer, an organic polymer, a silane, or an organohydrogensiloxane having at least two hydrogen atoms bonded to silicon atom per molecule. The organic group bonded to the silicon of such compound may be either unsubstituted or substituted with a substituent such as halogen atom. Such SiH group containing compounds are well known in the art, and they are free from ethylenically and acetylenically unsaturated bonds.

In the preferable curable composition of the present invention, one or more organopolysiloxanes having at least two ethylenically unsaturated groups or acetylenically unsaturated groups in one molecule reacts with a relatively low molecular weight liquid organic polymer or organohydrogensiloxane which has on average at least two hydrogen atoms bonded to the silicon per molecule (component B). In order to obtain the cured product, sum of the alkenyl groups and the average number of the hydrogen atoms bonded to the silicon should be greater than four.

The organohydrogensiloxane suitable for use has at least four, and on average, 20 or more silicon atoms, and preferably a viscosity at 25°C of up to 10 Pa·s. These organohydrogensiloxanes include a repeating unit represented by the formula: HSiO_{1.5}, R¹HSiO, and/or R¹₂HSiO_{0.5}. The molecule of this component may also contain a monoorganosiloxane, diorganosiloxane, triorganosiloxy, and SiO_{4/2} units which do not contain hydrogen atom bonded to the silicon. In these formulae, R¹ is independently a monovalent hydrocarbon group as defined above, although it is preferred that R¹ does not contain aliphatic unsaturated bond.

Alternatively, the component B may be a cyclic compound containing at least four organohydrogensiloxy groups represented by the formula: R¹HSiO or a compound represented by the formula: HR¹₂SiO(HR¹SiO)ₐSiR¹₂H (wherein a is at least 1).

In the above formulae, R¹ is as defined above, although R¹ is preferably methyl. The component B is preferably a straight chain trimethylsiloxy-terminated methylhydrogenpolysiloxane or dimethylsiloxane - methylhydrogensiloxane copolymer containing, on average, 5 to 50 repeating units per molecule wherein methylhydrogensiloxane unit constitutes 30 to 100 mol% of the repeating units.

In addition to the hydrocarbon group and the reactive group required for the curing of the curable composition, the components A and B may also contain a substituent such as alkoxy group or epoxy group which provides adhesiveness and other useful properties to the cured product obtained from the curable composition of the present invention.

Together with the number and the distribution of the hydrogen atoms bonded to the silicon and the alkenyl group in such components, the molecular weight of the components A and B determines position of the crosslinking in the cured product, which in turn results in the consistency of the resulting cured product which ranges from that of a vitreous resin or elastomer to that of a gel.

The concentration of the crosslinking per unit volume, i.e., crosslinking density determines various properties, and in particular, hardness, tensile strength, and elongation of the cured elastomer.

Accordingly, to obtain the aimed cured product, the structure and blending ratio of components A and B may be selected as in the conventional way.

In this case, the molar ratio of the hydrogen atom bonded to the silicon in the component B to the alkenyl group in the component A is in the range of 0.3 to 5, especially 0.5 to 1.5.

The PGE-bearing hydrosilylation catalyst of component C is incorporated at an amount effective for the curing which is typically 0.1 to 1000 ppm, and in particular, 1 to 500 ppm in terms of the platinum group element in relation to the component A.

The hydrosilylation inhibitor of component D is incorporated at an amount effective for inhibiting the catalytic action of the hydrosilylation catalyst in the absence of oxygen and moisture. More specifically, the hydrosilylation inhibitor is incorporated such that molar ratio (equivalence ratio) of the titanium in the inhibitor to the platinum group element in the hydrosilylation catalyst is typically 1 to 1000, preferably 5 to 500, and most preferably 10 to 300, and the amount of the hydrosilylation inhibitor is 0.0001 to 5% by weight, and in particular, 0.01 to 1% by weight of the entire curable composition.

It is to be noted that the composition of the present invention should be free from water. The composition may be dehydrated by freeze drying, or by adding a dehydrating agent.

The dehydrating agent is one which does not give any influence to the property of the curable composition, and is preferably a neutral or weakly basic dehydrating agent. Examples of the dehydrating agents include ketenesilyl acetal, α-silyl ester, silazane, anhydrous sodium sulfate and molecular sieves. Especially, preferred are 2-trimethoxysilyl propionate and 2-methyldialkoxysilyl propionate.

The dehydrating agent is incorporated in an amount of 0.01 to 10 parts by weight, especially 0.1 to 5 parts by weight per 100 parts by weight of component A.

In the production as described above, the hydrosililation inhibitor used was the one prepared by reacting (1) a titanium compound having an alkoxy group in its ligand, and (2) an organosilicon compound having at least one hydrogen atom bonded to silicon atom per molecule. However, such hydrosililation inhibitor (namely, the hydrosililation inhibitor comprising the reaction product of the titanium compound having an alkoxy group in its ligand and the compound having hydrogen atom bonded to silicon) may also be generated in the course of producing the hydrosilylation curable composition when various components are incorporated in the composition. More specifically, when the titanium compound having an alkoxy group in its ligand which is the component (1) in the inhibitor is added in the absence of oxygen and moisture to a mixture containing a compound containing at least two ethylenically unsaturated double bonds or acetylenically unsaturated group such as an organopolysiloxane containing alkenyl groups and an organohydrogenpolysiloxane crosslinking agent and the mixture is stirred, dehydrogenation occurs between a part of the organohydrogenpolysiloxane incorporated in the mixture as the crosslinking agent and the alkoxy group of the titanium compound to generate the hydrosililation inhibitor as the reaction product. In this method, the generation of the inhibitor can also be readily confirmed by change in the color of the composition. When the hydrosilylation inhibitor is generated within the hydrosilylation curable composition in the course of producing the hydrosilylation curable composition, the titanium compound having an alkoxy group in its ligand which is the component (1) in the inhibitor is required to add and mix in the absence of oxygen and moisture and addition of the platinum catalyst to the resulting composition will be necessary after completing the generation of the hydrosilylation inhibitor.

Components C and D may be previously mixed in the absence of oxygen and moisture to prepare a hydrosilylation catalyst composition.

The curable composition of the present invention exihibits an excellent storage stability by mixing components A, B, C and D and storing the mixture in the substantial absence of oxygen or moisture (water). When the curable composition is exposed to oxygen and/or moisture, it readily cures at room temperature.

The substantial absence of oxygen and moisture (water) means that each of the oxygen concentration and moisture concentration is preferably up to 100 ppm, especially up to 10 ppm, although the concentration is not limited to the above range so long as the inventive inhibitor exerts its effect.

### EXAMPLES

Next, the present invention is described in further detail by referring to Examples and Comparative Examples which by no means limit the scope of the present invention. In the following Examples, the viscosity is the one measured by a rotary viscometer at 25°C.

In the following Examples, the code indicating the average composition of the silicone oil designates the units as described below.

| | |
|---|---|
| M: | (CH₃)₃SiO_{1/2} |
| D^{H}: | (CH₃)HSiO_{2/2} |
| D: | (CH₃)₂SiO_{2/2} |
| M^{vi}: | (CH₂=CH)(CH₃)₂SiO_{1/2} |
| D^{φ}: | (CH₃)(C₆H₅)SiO_{2/2} |
| T: | (CH₃)SiO_{3/2} |
| M^{H}: | (CH₃)₂HSiO_{1/2} |

In the following Examples, the compounds were used after dehydration. The process was conducted in an argon glovebox at oxygen concentration of up to 10 ppm in the absence of oxygen and moisture.

### Reference Example

### Preparation of platinum catalyst

The platinum catalyst used in this Reference Example was the reaction product of hexachloroplatinic acid and sym-tetramethyldivinyldisiloxane, and this reaction product was diluted to a platinum content of 1.0% by weight with liquid dimethylvinylsiloxy-terminated dimethylpolysiloxane having a viscosity of 0.6 Pa·s (Catalyst A), or with liquid trimethylsiloxy-terminated dimethylpolysiloxane having a viscosity of 1.0 Pa·s (Catalyst B).

### Example 1 and Comparative Example 1

This Example describes a hydrosilylation inhibitor comprising a titanium compound having an alkoxy group in its ligand a compound having hydrogen atom bonded to silicon atom which inactivates a platinum containing hydrosilylation catalyst in the absence of oxygen and moisture, and a hydrosilylation catalyst composition.

3.13 g of 1,1,1,3,5,5,5-heptamethyltrisiloxane was added to 1 g of tetrapropyl orthotitanate, and the mixture was stirred for 15 hours. The color of the mixture changed from colorless to black by dehydration (inhibitor A). 2.35 g of 1,1,1,3,5,5,5-heptamethyltrisiloxane was added to 1 g of tetrapropyl orthotitanate, and the mixture was stirred for 15 hours. The color of the mixture changed from colorless to black (inhibitor B).

The inhibitors A and B are effective when they are directly added to the hydrosilylation curable composition. The inhibitory effect of the inhibitors A and B, however, is improved when they are added as a catalyst composition prepared by contacting and mixing with a platinum catalyst at a high concentration. The composition prepared by adding 20.65 g of the inhibitor A to 10 g of the catalyst B and stirring the mixture for 15 hours is designated catalyst C (hydrosilylation catalyst composition).

0.61 g of catalyst C was added to a mixture of 100 g of dimethylvinylsiloxy-terminated dimethylpolysiloxane having a viscosity of 1.0 Pa·s; 4 g of silicone oil having an average composition of M₂D^{H}_{33.1}D₅₈; and 2 g of 2-ethylhexyl 2-methyldimethoxysilylpropionate.

The thus obtained composition (Example 1) retained its liquid state for at least 1 month in argon atmosphere. In this case, surface of the comparative sample which was exposed to air cured in 10 minutes.

For comparison purpose, catalyst D having no titanium compound having an alkoxy group in its ligand added was prepared by adding dropwise 2.90 g of triethoxy silane to 10 g of toluene solution of the reaction mixture of the hexachloroplatinic acid and the sym-tetramethyldivinyldisiloxane having a platinum content of 0.5% by weight. 0.77 g of catalyst D was added to a mixture of 100 g of dimethylvinylsiloxy-terminated dimethylpolysiloxane having a viscosity of 1.0 Pa·s and 4 g of silicone oil having an average composition of M₂D^{H}_{33.1}D₅₈. The resulting composition (Comparative Example 1) cured in 30 minutes in argon atmosphere.

### Comparative Example 2

To a mixture of 100 g of dimethylvinylsiloxy-terminated dimethylpolysiloxane having a viscosity of 1.0 Pa·s, 4 g of silicone oil having an average compositional formula: M₂D^{H}_{33.1}D₅₈, and 0.01 g of ethynylcyclohexanol which is a hydrosilylation inhibitor generally used for heat curing was added 0.20 g of Catalyst A. The resulting composition was cured in 2 hours when exposed in air and when stored in Ar atmosphere.

### Example 2

Example 2 shows production process of a composition which inhibits reaction between dimethylvinylsiloxy-terminated dimethylpolysiloxane which is highly susceptible to hydrosilylation and dimethyl hydrogen siloxy-terminated dimethylpolysiloxane in the absence of oxygen and moisture.

2.0 g of inhibitor B and 0.31 g of catalyst C were added in this order to a mixture of 100 g of silicone oil having an average composition of M^{vi}_{0.82}M_{0.71}D_{96.5}D^{φ}₂T_{1.5}, 7.0 g of silicone oil having an average composition of M^{H}₂D_{18.1}, and 2 g of 2-ethylhexyl 2-methyldimethoxysilylpropionate.

The thus produced composition retained its liquid state for at least 1 month. In this case, surface of the comparative sample which was exposed to air gelated in 2 hours.

### Example 3

This Example is the production process which does not require separate production of the inhibitor.

After mixing 100 g of dimethylvinylsiloxy-terminated dimethylpolysiloxane having a viscosity 1.0 Pa·s, 4 g of silicone oil having an average composition of M₂D^{H}_{33.1}D₅₈, and 1.0 g of tetrapropyl orthotitanate, the mixture was allowed to stand for 15 hours. Formation of the dehydration product (inhibitor) of the SiH group containing silicone oil and the tetrapropyl orthotitanate was confirmed by the color change from colorless to black, and 0.2 g of catalyst A was added. This composition had a shelf life of at least 6 months when stored in argon atmosphere, while the surface of this composition cured by exposure to air for 10 minutes.

## Claims

1. A hydrosilylation inhibitor comprising a reaction product of (1) a titanium compound having an alkoxy group in its ligand, and (2) an organosilicon compound having at least one hydrogen atom bonded to silicon atom per molecule.

2. The hydrosilylation inhibitor according to claim 1 wherein the titanium compound (1) having an alkoxy group in its ligand is a tetraalkoxy titanium represented by the formula Ti(OR³)₄ wherein R³ is independently an alkyl group, or an alkyl orthotitanate.

3. The hydrosilylation inhibitor according to claim 2 wherein the titanium compound (1) having an alkoxy group in its ligand is at least one selected from the group consisting of tetraethyl orthotitanate, tetra-n-propyl orthotitanate, tetraisopropyl orthotitanate, tetrabutyl orthotitanate and tetra-2-ethylhexyl orthotitanate.

4. The hydrosilylation inhibitor according to any one of claims 1 to 3 wherein the organosilicon compound (2) having at least one hydrogen atom bonded to silicon atom per molecule is selected from an organohydrogensilane represented by the following formula (i):
R¹_{b}(OR²)_{4-a-b}SiHₐ (i),
and an organohydrogen(poly)siloxane having at least one unit represented by the following formula (ii):
H_{c}R¹_{d}(OR²)ₑSiO_{(4-c-d-e)/2} (ii)
wherein R¹ is independently a monovalent hydrocarbon group;
R² is independently an alkyl group; a is 1, 2, or 3; b is 0, 1, 2, or 3; a+b = 1, 2, 3, or 4; c is 1, 2, or 3; d and e are independently 0, 1, or 2; and c+d+e is 1, 2, or 3.

5. The hydrosilylation inhibitor according to claim 4 wherein the organosilicon compound (2) having at least one hydrogen atom bonded to silicon atom per molecule is an organohydrogenpolysiloxane having
M^{H} unit (diorganohydrogensiloxane unit),
D^{H} unit (organohydrogensiloxane unit) or
T^{H} unit (hydrogensilsesquioxane unit).

6. The hydrosilylation inhibitor according to claim 4 wherein the organosilicon compound (2) having at least one hydrogen atom bonded to silicon atom per molecule is at least one selected from the group consisting of trimethoxysilane, triethoxysilane, 1,1,1,3,5,5,5-heptamethyltrisiloxane, 1,1,1,3,5,7,7,7-octamethyltetrasiloxane, and 1,3,5,7-tetramethylcyclotetrasiloxane.

7. A hydrosilylation catalyst composition produced by contacting and mixing a PGE (platinum group element)-bearing hydrosilylation catalyst and the hydrosilylation inhibitor of any one of claims 1 to 6 in the absence of oxygen and moisture.

8. A curable composition containing
a compound containing at least two ethylenically unsaturated double bonds or acetylenically unsaturated group per molecule,
an organohydrogenpolysiloxane crosslinking agent,
a PGE-bearing hydrosilylation catalyst, and
the hydrosilylation inhibitor of any one of claims 1 to 6.

9. A curable composition containing
a compound containing at least two ethylenically unsaturated double bonds or acetylenically unsaturated group,
an organohydrogenpolysiloxane crosslinking agent, and
the hydrosilylation catalyst composition of claim 7.

10. The curable composition according to claim 9 further comprising the hydrosilylation inhibitor of any one of claims 1 to 6.

11. The curable composition according to claim 8 wherein the organosilicon compound (2) having at least one hydrogen atom bonded to silicon atom per molecule of the hydrosilylation inhibitor serves as the organohydrogenpolysiloxane crosslinking agent.

12. The curable composition according to claim 11 wherein the hydrosilylation inhibitor of any one of claims 1 to 6 is contained in an amount of 1 to 1000 times molar excess of the PGE-bearing hydrosilylation catalyst.

13. The curable composition according to any one of claims 8 to 10 wherein the hydrosilylation inhibitor of any one of claims 1 to 6 is contained in an amount of 0.0001 to 5% by weight in the composition.

14. The curable composition according to any one of claims 8 to 13 further comprising a dehydrating agent.

15. The curable composition according to any one of claims 8 to 14 wherein the compound containing at least 2 ethylenically unsaturated double bonds or acetylenically unsaturated group is an organopolysiloxane containing alkenyl groups.

16. Cured composition derived from the curable composition according to any one of claims 8 to 15 which has been cured in the presence of oxygen and/or moisture.

## Patentansprüche

1. Hydrosilylierungsinhibitor, umfassend ein Reaktionsprodukt aus (1) einer Titanverbindung, die in ihrem Liganden eine Alkoxygruppe besitzt, und (2) einer Organosiliciumverbindung, die mindestens ein Wasserstoffatom an Siliciumatom pro Molekül gebunden hat.

2. Hydrosilylierungsinhibitor nach Anspruch 1, wobei die Titanverbindung (1) mit einer Alkoxygruppe in ihrem Liganden ein durch die Formel Ti(OR³)₄ wiedergegebenes Tetraalkoxytitan ist, worin R³ unabhängig eine Alkylgruppe oder ein Alkylorthotitanat ist.

3. Hydrosilylierungsinhibitor nach Anspruch 2, wobei die Titanverbindung (1) mit einer Alkoxygruppe in ihrem Liganden mindestens eine ist, gewählt aus der Gruppe, bestehend aus Tetraethylorthotitanat, Tetra-n-propylorthotitanat, Tetraisopropylorthotitanat, Tetrabutylorthotitanat und Tetra-2-ethylhexylorthotitanat.

4. Hydrosilylierungsinhibitor nach mindestens einem der Ansprüche 1 bis 3, wobei die Organosiliciumverbindung (2), bei der mindestens ein Wasserstoffatom an Siliciumatom pro Molekül gebunden ist, gewählt ist aus einem Organohydrogensilan, wiedergegeben durch die folgende Formel (i):
R¹_{b}(OR²)_{4-a-b}SiHₐ (i)
und einem Organohydrogen(poly)siloxan mit mindestens einer Einheit, wiedergegeben durch die folgende Formel (ii):
H_{c}R¹_{d}(OR²)ₑSiO_{(4-c-d-e)/2} (ii)
worin R¹ unabhängig eine einwertige Kohlenwasserstoffgruppe ist; R² unabhängig eine Alkylgruppe ist; a 1, 2 oder 3 ist; b 0, 1, 2 oder 3 ist; a+b = 1, 2, 3 oder 4; c 1, 2 oder 3 ist; d und e unabhängig voneinander 0, 1 oder 2 sind; und c+d+e 1, 2 oder 3 ist.

5. Hydrosilylierungsinhibitor nach Anspruch 4, wobei die Organosiliciumverbindung (2), bei der mindestens ein Wasserstoffatom an Siliciumatom pro Molekül gebunden ist, ein Organohydrogenpolysiloxan ist mit einer
M^{H}-Einheit (Diorganohydrogensiloxaneinheit),
D^{H}-Einheit (Organohydrogensiloxaneinheit) oder
T^{H}-Einheit (Hydrogensilsesquioxaneinheit).

6. Hydrosilylierungsinhibitor nach Anspruch 4, wobei die Organosiliciumverbindung (2), bei der mindestens ein Wasserstoffatom an Siliciumatom pro Molekül gebunden ist, mindestens eine ist, gewählt aus der Gruppe, bestehend aus Trimethoxysilan, Triethoxysilan, 1,1,1,3,5,5,5-Heptamethyltrisiloxan, 1,1,1,3,5,7,7,7-Octamethyltetrasiloxan und 1,3,5,7-Tetramethylcyclotetrasiloxan.

7. Hydrosilylierungskatalysatorzusammensetzung, erzeugt durch Kontaktieren und Vermischen eines PGE (Platingruppenelement)-tragenden Hydrosilylierungskatalysators und des Hydrosilylierungsinhibitors gemäß mindestens einem der Ansprüche 1 bis 6 in Abwesenheit von Sauerstoff und Feuchtigkeit.

8. Härtbare Zusammensetzung, enthaltend
eine Verbindung, enthaltend mindestens zwei ethylenisch ungesättigte Doppelbindungen oder acetylenisch ungesättigte Gruppe pro Molekül,
ein Organohydrogenpolysiloxan-Vernetzungsmittel,
einen PGE-tragenden Hydrosilylierungskatalysator, und
den Hydrosilylierungsinhibitor gemäß mindestens einem der Ansprüche 1 bis 6.

9. Härtbare Zusammensetzung, enthaltend
eine Verbindung, enthaltend mindestens zwei ethylenisch ungesättigte Doppelbindungen oder acetylenisch ungesättigte Gruppe,
ein Organohydrogenpolysiloxan-Vernetzungsmittel, und
die Hydrosilylierungskatalysatorzusammensetzung gemäß Anspruch 7.

10. Härtbare Zusammensetzung nach Anspruch 9, weiterhin umfassend den Hydrosilylierungsinhibitor gemäß mindestens einem der Ansprüche 1 bis 6.

11. Härtbare Zusammensetzung nach Anspruch 8, wobei die Organosiliciumverbindung (2), bei der mindestens ein Wasserstoffatom an Siliciumatom pro Molekül gebunden ist, des Hydrosilylierungsinhibitors als das Organohydrogenpolysiloxan-Vernetzungsmittel agiert.

12. Härtbare Zusammensetzung nach Anspruch 11, wobei der Hydrosilylierungsinhibitor gemäß mindestens einem der Ansprüche 1 bis 6 in einer Menge von dem 1- bis 1000-fachen molaren Überschuss des PGE-tragenden Hydrosilylierungskatalysators enthalten ist.

13. Härtbare Zusammensetzung nach mindestens einem der Ansprüche 8 bis 10, wobei der Hydrosilylierungsinhibitor gemäß mindestens einem der Ansprüche 1 bis 6 in einer Menge von 0,0001 bis 5 Gew.-% in der Zusammensetzung enthalten ist.

14. Härtbare Zusammensetzung gemäß mindestens einem der Ansprüche 8 bis 13, umfassend weiterhin ein Dehydratisierungsmittel.

15. Härtbare Zusammensetzung gemäß mindestens einem der Ansprüche 8 bis 14, wobei die Verbindung, welche mindestens zwei ethylenisch ungesättigte Doppelbindungen oder acetylenisch ungesättigte Gruppe enthält, ein Organopolysiloxan ist, das Alkenylgruppen enthält.

16. Gehärtete Zusammensetzung, abgeleitet aus der härtbaren Zusammensetzung gemäß mindestens einem der Ansprüche 8 bis 15, welche in Gegenwart von Sauerstoff und/oder Feuchtigkeit gehärtet worden ist.

## Revendications

1. Inhibiteur d'hydrosilylation comprenant un produit réactionnel de (1) un composé de titane ayant un groupe alcoxy dans son ligand et (2) un composé d'organosilicium ayant au moins un atome d'hydrogène lié à un atome de silicium par molécule.

2. Inhibiteur d'hydrosilylation selon la revendication 1, dans lequel le composé de titane (1) ayant un groupe alcoxy dans son ligand est un tétraalcoxytitane représenté par la formule Ti (OR³)₄, où R³ est indépendamment un groupe alcoxy ou un alkylorthotitanate.

3. Inhibiteur d'hydrosilylation selon la revendication 2, dans lequel le composé de titane (1) ayant un groupe alcoxy dans son ligand est au moins un choisi dans le groupe constitué par le tétraéthylorthotitanate, le tétra-n-propylorthotitanate, le tétraisopropylorthotitanate, le tétrabutylorthotitanate et le tétra-2-éthylhexylorthotitanate.

4. Inhibiteur d'hydrosilylation selon l'une quelconque des revendications 1 à 3, dans lequel le composé d'organosilicium (2) ayant au moins un atome d'hydrogène lié à un atome de silicium par molécule est choisi parmi un organohydrogénosilane représenté par la formule suivante (i) :
R¹_{b}(OR²)_{4-a-b}SiHₐ (ii)
et un organohydrogéno(poly)siloxane ayant au moins un motif représenté par la formule suivante (ii) :
H_{c}R¹_{d}(OR²)ₙSiO_{(4-c-d-e)/2} (ii)
où R¹ est indépendamment un groupe hydrocarboné monovalent ; R² est indépendamment un groupe alkyle ; a vaut 1, 2 ou 3 ; b vaut 0, 1, 2 ou 3 ; a + b = 1, 2, 3 ou 4 ; c vaut 1, 2 ou 3 ; d et e valent indépendamment 0, 1 ou 2 ; et c + d + e valent 1, 2 ou 3.

5. Inhibiteur d'hydrosilylation selon la revendication 4, dans lequel le composé d'organosilicium (2) ayant au moins un atome d'hydrogène lié à un atome de silicium par molécule est un organohydrogénopolysiloxane ayant
un motif M^{H} (motif diorganohydrogénosiloxane),
un motif D^{H} (motif organohydrogénosiloxane) ou
un motif T^{H} (motif hydrogénosilsesquioxane).

6. Inhibiteur d'hydrosilylation selon la revendication 4, dans lequel le composé d'organosilicium (2) ayant au moins un atome d'hydrogène lié à un atome de silicium par molécule est au moins un choisi dans le groupe constitué par le triméthoxysilane, le triéthoxysilane, le 1,1,1,3,5,5,5-heptaméthyltrisiloxane, le 1,1,1,3,5,7,7,7-octaméthyltétrasiloxane et le 1,3,5,7-tétraméthylcyclotétrasiloxane.

7. Composition de catalyseur d'hydrosilylation produite en mettant en contact et en mélangeant un catalyseur d'hydrosilylation incluant un EGP (élément du groupe du platine) et l'inhibiteur d'hydrosilylation selon l'une quelconque des revendications 1 à 6 en l'absence d'oxygène et d'humidité.

8. Composition durcissable contenant
un composé contenant au moins deux doubles liaisons éthyléniquement insaturées ou un groupe acétyléniquement insaturé par molécule,
un agent de réticulation à base d'organohydrogénopolysiloxane,
un catalyseur d'hydrosilylation incluant un EGP et l'inhibiteur d'hydrosilylation selon l'une quelconque des revendications 1 à 6.

9. Composition durcissable contenant
un composé contenant au moins deux doubles liaisons éthyléniquement insaturées ou un groupe acétyléniquement insaturé par molécule,
un agent de réticulation à base d'organohydrogénopolysiloxane,
un catalyseur d'hydrosilylation incluant un EGP et
la composition de catalyseur d'hydrosilylation selon la revendication 7.

10. Composition durcissable selon la revendication 9, comprenant en outre l'inhibiteur d'hydrosilylation selon l'une quelconque des revendications 1 à 6.

11. Composition durcissable selon la revendication 8, dans laquelle le composé d'organosilicium (2) ayant au moins un atome d'hydrogène lié à un atome de silicium par molécule de l'inhibiteur d'hydrosilylation sert d'agent de réticulation à base d'organohydrogénopolysiloxane.

12. Composition durcissable selon la revendication 11, dans laquelle l'inhibiteur d'hydrosilylation selon l'une quelconque des revendications 1 à 6 est présent dans une quantité d'excédent molaire de 1 à 1 000 fois celle du catalyseur d'hydrosilylation incluant un EGP.

13. Composition durcissable selon l'une quelconque des revendications 8 à 10, dans laquelle l'inhibiteur d'hydrosilylation selon l'une quelconque des revendications 1 à 6 est présent dans une quantité de 0,0001 à 5 % en poids dans la composition.

14. Composition durcissable selon l'une quelconque des revendications 8 à 13, comprenant en outre un agent déshydratant.

15. Composition durcissable selon l'une quelconque des revendications 8 à 14, dans laquelle le composé contenant au moins deux doubles liaisons éthyléniquement insaturées ou un groupe acétyléniquement insaturé est un groupe alcényle contenant un organopolysiloxane.

16. Composition durcie provenant de la composition durcissable selon l'une quelconque des revendications 8 à 15, qui a été durcie en présence d'oxygène et/ou d'eau.
